# EUROPEAN PATENT APPLICATION

(11) **EP 4 732 656 A1**
(43) Date of publication of application: **29.04.2026**
(21) Application number: 24814210.1
(22) Date of filing: 17.05.2024
(51) Int. Cl.: A01D 34/00, G05D 1/43, G05D 1/00

(54) **MOWING PATH CONSTRUCTION METHOD FOR MULTIPLE LAWNS, AND ELECTRONIC DEVICE AND STORAGE MEDIUM**

(30) Priority: 29.05.2023 CN 202310621028
(71) Applicant: Yosemite Shanghai Robotics Co., Ltd, Shanghai 200233 (CN)
(72) Inventor: SU, Hans, Shanghai 200233 (CN); LI, Jack, Shanghai 200233 (CN); GU, Jeff, Shanghai 200233 (CN); ZHAO, Xun, Shanghai 200233 (CN); FAN, Wolory, Shanghai 200233 (CN)
(74) Representative: JWP Patent & Trademark Attorneys
(86) International application number: PCT/CN2024/093940
(87) International publication number: WO 2024/245011

(57) **Abstract**

Disclosed are a method for constructing a mowing path for multiple lawns, an electronic device, and a computer readable medium. The method includes: displaying an area map of a first lawn and an area map of a second lawn; receiving a first position and a second position, wherein the first position is a position within the area map of the first lawn, and the second position is a position within the area map of the second lawn; controlling a mower to travel from the first position to the second position to obtain a corridor path; and constructing a joint mowing path for the first lawn and the second lawn based on the corridor path, a mowing path of the first lawn, and a mowing path of the second lawn. No user intervention is required while the mower operates along the joint mowing path, thereby saving manpower and facilitating.

## Description

### TECHNICAL FIELD

The present disclosure relates to the technical field of mowers, and in particular, relates to a method for constructing a mowing path for multiple lawns, an electronic device, and a computer readable medium.

### BACKGROUND

With continuous progress of the computer technology and artificial intelligence technology, mowers have been used in users' lives to help users automatically mow lawns. Once set up, mowers do not need to be particularly managed, and thus users are liberated from tedious and laborious household chores such as lawn cleaning and maintenance.

However, during actual operation, a mower sometimes needs to continuously mow multiple lawns. Therefore, it is necessary to construct a suitable path such that the mower continuously performs mowing operations on the multiple lawns along the path.

### SUMMARY

In view of the above problems, embodiments of the present disclosure provide a method for constructing a mowing path for multiple lawns, an electronic device, and a computer readable medium. By constructing a joint mowing path for multiple lawns, the present disclosure facilitates a mower in continuously performing mowing operations on multiple lawns, thereby reducing human intervention and saving manpower.

In a first aspect of the embodiments of the present disclosure, a method for constructing a mowing path for multiple lawns is provided. The method includes: displaying an area map of a first lawn and an area map of a second lawn; receiving a first position and a second position, wherein the first position is a position within the area map of the first lawn, and the second position is a position within the area map of the second lawn; controlling a mower to travel from the first position to the second position to obtain a corridor path; and constructing a joint mowing path for the first lawn and the second lawn based on the corridor path, a mowing path of the first lawn, and a mowing path of the second lawn, wherein the joint mowing path is used for the mower to continuously mow the first lawn and the second lawn.

In the method according to the first aspect, by displaying the area map of the first lawn and the area map of the second lawn, the area maps of the first lawn and the second lawn are presented to the user, providing an image (visual) reference for the user to select the first position and the second position. By receiving a position in the area map of the first lawn as the first position and receiving a position in the area map of the second lawn as the second position, two endpoints for establishing the corridor path between the first lawn and the second lawn are provided. By controlling the mower to travel from the first position to the second position to obtain the corridor path, the first lawn and the second lawn may be communicated by means of the corridor path, which provides a feasible route for subsequent travel of the mower between the first lawn and the second lawn. By constructing the joint mowing path for the first lawn and the second lawn based on the corridor path, the mowing path of the first lawn, and the mowing path of the second lawn, the mower is enabled to continuously mow the first lawn and the second lawn according to the joint mowing path, without manual intervention, thereby saving time and effort and facilitating use of the mower.

In some embodiments, for controlling the mower to travel from the first position to the second position to obtain the corridor path, the method further includes: controlling the mower to travel from the first position to the second position according to a predetermined connecting line to obtain the corridor path.

With the above solution, the electronic device only needs to receive the first position and the second position indicated by the user during construction of the corridor path. The connecting line between the first position and the second position may be automatically generated according to predetermined rules, thereby reducing user participation in the process of constructing the corridor path and facilitating use of the mower.

In some embodiments, in a case where an obstacle is present on the predetermined connecting line, the corridor path is a path bypassing the obstacle.

In this way, the mower is enabled to bypass obstacles while continuously mowing the first lawn and the second lawn, implementing smooth passage between the first lawn and the second lawn.

In some embodiments, the method further includes: receiving a first notification from the mower, wherein the first notification is used to notify that an obstacle is present on the predetermined connecting line; and displaying the obstacle according to the first notification.

In this way, by displaying the obstacle, it is convenient to use the obstacle as a reference for positioning when the mower continuously mows the first lawn and the second lawn.

In some embodiments, for controlling the mower to travel from the first position to the second position to obtain the corridor path, the method further includes: controlling the mower to travel from the first position to the second position according to a connecting line designated by a user to obtain the corridor path.

With the above solution, since the connecting line designated by the user is generally a connecting line formulated according to user needs, the corridor path obtained by the method conforms more to user needs.

In some embodiments, for constructing the joint mowing path for the first lawn and the second lawn based on the corridor path, the mowing path of the first lawn, and the mowing path of the second lawn, the method further includes: constructing a first path from an end point of the mowing path of the first lawn to the first position; constructing a second path from a start point of the mowing path of the second lawn to the second position; and sequentially connecting the mowing path of the first lawn, the first path, the corridor path, the second path, and the mowing path of the second lawn to obtain the joint mowing path.

In this way, a feasible implementation is provided for constructing a joint mowing path.

In some embodiments, the method further includes: storing the joint mowing path.

Consequently, the mower is enabled to continuously mow the first lawn and the second lawn according to the joint mowing path.

In a second aspect of the embodiments of the present disclosure, an apparatus for constructing a mowing path for multiple lawns is provided. The apparatus includes modules configured to perform the method for constructing a mowing path for multiple lawns as described above.

In a third aspect of the embodiments of the present disclosure, an electronic device is provided. The electronic device includes a memory and a processor, wherein the memory stores a computer program, and the processor, when running the computer program, is caused to perform the method for constructing a mowing path for multiple lawns as described above.

In a fourth aspect of the embodiments of the present disclosure, a computer-readable storage medium is provided. The computer-readable storage medium stores a computer program thereon, wherein the computer program, when run by a processor, causes the processor to perform the method for constructing a mowing path for multiple lawns as described above.

In a fifth aspect of the embodiments of the present disclosure, a computer program product is provided. The computer program product includes one or more executable instructions, wherein the one or more executable are stored in a readable storage medium. At least one processor of an electronic device is capable of reading the one or more executable instructions from the readable storage medium, and the one or more executable instructions, when executed by the at least one processor, cause the electronic device to perform the method for constructing a mowing path for multiple lawns as described above.

In summary, by constructing the joint mowing path for the first lawn and the second lawn, the mower is enabled to continuously mow the first lawn and the second lawn according to the joint mowing path, without manual intervention, thereby saving time and effort and facilitating use of the mower.

The above description only summarizes the technical solutions of the embodiments of the present disclosure. Specific embodiments of the present disclosure are described hereinafter to better and clearer understand the technical solutions of the embodiments of the present disclosure, to practice the technical solutions based on the disclosure of the specification and to make the above and other objectives, features and advantages of the embodiments of the present disclosure more apparent and understandable.

### BRIEF DESCRIPTION OF THE DRAWINGS

For clearer descriptions of technical solutions according to the embodiments of the present disclosure, drawings that are to be referred for description of the embodiments are briefly described hereinafter. Apparently, the drawings described hereinafter merely illustrate some embodiments of the present disclosure. Persons of ordinary skill in the art may also derive other drawings based on the drawings described herein without any creative effort.
FIG. 1 is a schematic flowchart of a method for constructing a mowing path for multiple lawns according to some embodiments of the present disclosure.
FIG. 2 is a schematic diagram of a scenario where an electronic device receives a first position and a second position.
FIG. 3 is a schematic diagram of a scenario where the electronic device constructs a corridor path in a case where no obstacle is present on a predetermined connecting line.
FIG. 4 is a schematic diagram of a scenario where the electronic device constructs a corridor path in a case where an obstacle is present on the predetermined connecting line.
FIG. 5 is a schematic flowchart of a method for constructing a mowing path for multiple lawns according to some embodiments of the present disclosure.
FIG. 6 is a schematic diagram of human-computer interaction where the electronic device controls a mower to travel.
FIG. 7 is a schematic flowchart of a method for constructing a mowing path for multiple lawns according to some embodiments of the present disclosure.
FIG. 8 is a schematic structural diagram of an apparatus for constructing a mowing path for multiple lawns according to some embodiments of the present disclosure.

### DETAILED DESCRIPTION OF THE EMBODIMENTS

The terms "comprise," "include," and variations thereof in the specification, claims and accompanying drawings are intended to define a non-exclusive meaning. The word "a" or "an" used before a module does not exclude the presence of a plurality of such modules.

The terms "example" and "embodiment" in this specification signify that the specific characteristic, structures or features described with reference to the embodiments may be covered in at least one embodiment of the present disclosure. The term "embodiment," when used in various positions of the description, neither indicates the same embodiment, nor indicates an independent or optional embodiment that is exclusive of the other embodiments. A person skilled in the art would implicitly or explicitly understand that the embodiments described in this specification may be incorporated with other embodiments.

Terms such as "first," "second," and the like in the specifications, claims and the accompanying drawings of the present disclosure are intended to distinguish different objects but are not intended to define a specific sequence. Such terms may explicitly or implicitly indicate one or more such features.

In the description of the embodiments of the present disclosure, the term "multiple" or "a plurality of" signifies at least two, unless otherwise specified. Likewise, the term "a plurality of groups" or "multiple groups" signifies at least two groups.

A method for constructing a mowing path for multiple lawns, an electronic device, and a computer readable medium according to the present disclosure are described in detail hereinafter with reference to the accompanying drawings.

Exemplarily, the method for constructing a mowing path for multiple lawns according to the present disclosure may be performed by an electronic device, or by a software apparatus and/or a hardware apparatus within the electronic device. For example, the electronic device may be a computer, a mobile phone, a remote controller, a watch, or a mower, or the like, and the software apparatus in the electronic device may be an application (APP), a webpage, or an official account, or the like.

The electronic device may be connected to the mower via a wired connection or via a wireless connection. The present disclosure does not limit the connection between the electronic device and the mower.

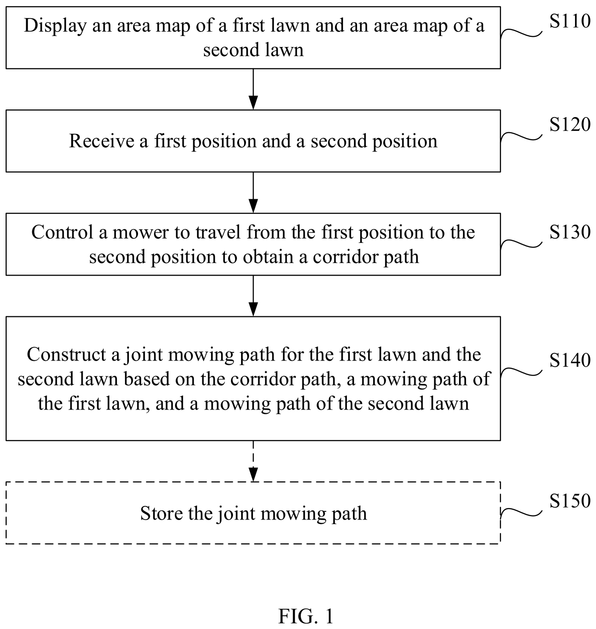

The method is illustrated by taking the execution subject of the method being an APP in the electronic device as an example. FIG. 1 is a schematic flowchart of a method for constructing a mowing path for multiple lawns according to some embodiments of the present disclosure. As illustrated in FIG. 1, the method for constructing a mowing path for multiple lawns according to the present disclosure may include the following steps.

In S110, an area map of a first lawn and an area map of a second lawn are displayed.

Upon receiving a request from a user, the APP may display the area map of the first lawn and the area map of the second lawn on a display screen of the electronic device.

The request is used to request the APP to create a joint mowing path. The present disclosure does not limit the specific implementation of the request. For example, the request is an input operation of the user on the APP, or the request is an instruction transmitted to the APP by another electronic device.

An area map of a lawn includes at least a boundary of the lawn, and static objects distributed within the boundary. For example, the static objects may be houses, utility poles, or swimming pools, or the like.

One or more first lawns may be involved. One or more second lawns may be involved. The present disclosure does not limit parameters such as the type and size of a lawn. For ease of description, the present disclosure is illustrated by taking the first lawn being one lawn and the second lawn being one lawn as an example.

In S120, a first position and a second position are received, wherein the first position is a position within the area map of the first lawn, and the second position is a position within the area map of the second lawn.

The APP may receive the first position and the second position via a plurality of specific implementations.

In some examples, the user clicks or taps a position in the area map of the first lawn. Upon receiving the click or tap operation, the APP may determine the position as the first position.

Similarly, the user clicks or taps a position in the area map of the second lawn. Upon receiving the click or tap operation, the APP may determine the position as the second position.

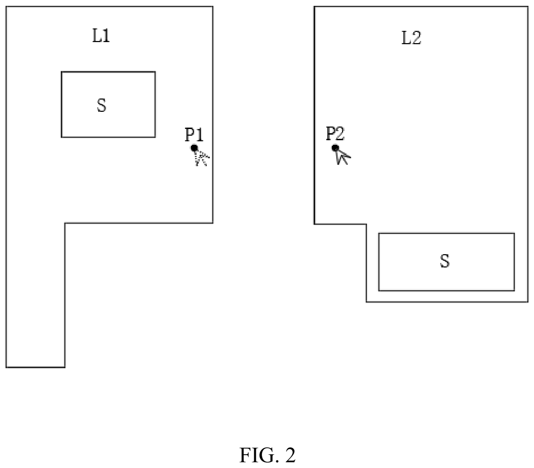

FIG. 2 is a schematic diagram of a scenario where a user clicks or taps a second position in the APP. In FIG. 2, L1 represents the area map of the first lawn, L2 represents the area map of the second lawn, and S represents a static object in an area map.

As illustrated in FIG. 2, the user clicks or taps a position P1 in L1. Upon receiving this click or tap operation, the APP determines the position P1 as the first position. The user clicks or taps a position P2 in L2. Upon receiving the click or tap operation, the APP determines the position P2 as the second position.

In other examples, the user selects by clicking or tapping a connecting line between the area map of the first lawn and the area map of the second lawn. Upon receiving the connecting line, the APP determines an endpoint of the connecting line that is inside the area map of the first lawn as the first position, and an endpoint that is inside the area map of the second lawn as the second position.

The first position may be on a boundary of the area map of the first lawn, or may be inside the area map of the first lawn, which is not limited in the embodiments of the present disclosure.

Similarly, the second position may also be on a boundary of the area map of the second lawn, or may be inside the area map of the second lawn.

In S130, the mower is controlled to travel from the first position to the second position to obtain a corridor path.

Upon receiving the first position and the second position, the APP may control the mower to travel from the first position to the second position. For example, the APP may transmit an instruction to the mower, wherein the instruction is used to instruct the mower to travel from the first position to the second position.

Consequently, the mower is capable of recording consecutive coordinate positions during travel, and transmitting all the recorded consecutive coordinate positions from the first position to the second position to the APP. The APP obtains the corridor path according to all the recorded consecutive coordinate positions.

The corridor path is a path connecting the first lawn and the second lawn.

Therefore, causing the mower to simulate a route from the first position to the second position is beneficial for the APP to obtain the corridor path according to the consecutive coordinate positions recorded during the travel of the mower.

In S140, a joint mowing path is constructed for the first lawn and the second lawn based on the corridor path, a mowing path of the first lawn, and a mowing path of the second lawn, wherein the joint mowing path is used for the mower to travel during continuously mowing the first lawn and the second lawn.

The mowing path of the first lawn is a travel path of the mower during mowing the first lawn, and the mowing path of the second lawn is a travel path of the mower during mowing the second lawn.

The present disclosure does not limit the specific implementation of the mowing path of the first lawn or the mowing path of the second lawn. For example, the mowing path of the first lawn or the mowing path of the second lawn may be historically stored in the APP, or sent to the APP by another electronic device. Alternatively, the mowing path of the first lawn or the mowing path of the second lawn may be constructed by the APP in real-time upon S130 and prior to S140.

The APP constructs the joint mowing path for the first lawn and the second lawn based on the corridor path, the mowing path of the first lawn, and the mowing path of the second lawn. Consequently, the mower is enabled to continuously mow the first lawn and the second lawn according to the joint mowing path.

The mowing process may be a mowing process from the first lawn to the second lawn, or may be a mowing process from the second lawn to the first lawn.

In S150, the joint mowing path is stored.

The APP stores the joint mowing path in the electronic device where the APP is installed or in another electronic device. S150 is an optional step. In a case where the mower needs to continuously mow the first lawn and the second lawn, the APP may perform S110 to S140 to obtain the joint mowing path, such that the mower is capable of completing the process of continuously mowing the first lawn and the second lawn according to the joint mowing path created in real-time. Alternatively, in a case where the mower needs to continuously mow the first lawn and the second lawn, the mower may acquire the stored joint mowing path from the APP, such that the mower is capable of completing the process of continuously mowing the first lawn and the second lawn according to the historically stored joint mowing path.

Exemplarily, in a case where the mower needs to continuously perform mowing operations on the first lawn and the second lawn, the mower may perform the mowing operation on the first lawn along the mowing path of the first lawn. Upon completion of the mowing operation, the mower arrives at the second lawn from the first lawn via the corridor path, and performs the mowing operation on the second lawn along the mowing path of the second lawn.

Similarly, in a case where the mower needs to continuously perform mowing operations on three or even more lawns, the mower may perform the mowing operation on a first lawn along a mowing path of the first lawn. Upon completion of the mowing operation on the first lawn, the mower travels to a second lawn via a corridor path between the first lawn and the second lawn, and performs the mowing operation on the second lawn along a mowing path of the second lawn. Upon completion of the mowing operation on the second lawn, the mower travels to a third lawn via a corridor path between the second lawn and the third lawn, and performs the mowing operation on the third lawn along a mowing path of the third lawn, until the mower completes mowing all lawns on which continuous mowing operations are required.

It is obvious that, by means of the joint mowing path for multiple lawns constructed by the method according to the present disclosure, the mower is enabled to automatically and continuously mow multiple lawns according to the joint mowing path for the multiple lawns, without manual intervention, thereby saving time and effort and facilitating use of the mower.

In summary, in the method for constructing a mowing path for multiple lawns according to the present disclosure, by displaying the area map of the first lawn and the area map of the second lawn, the area maps of the first lawn and the second lawn to the user are presented to the user, providing an image (visual) reference for the user to select the first position and the second position. By receiving a position in the area map of the first lawn as the first position and receiving a position in the area map of the second lawn as the second position, two endpoints for establishing the corridor path between the first lawn and the second lawn are provided. By controlling the mower to travel from the first position to the second position to obtain the corridor path, the first lawn and the second lawn may be communicated by means of the corridor path, which provides a feasible route for subsequent travel of the mower between the first lawn and the second lawn. By constructing the joint mowing path for the first lawn and the second lawn based on the corridor path, the mowing path of the first lawn, and the mowing path of the second lawn, the mower is enabled to continuously mow the first lawn and the second lawn according to the joint mowing path, without manual intervention, thereby saving time and effort and facilitating use of the mower.

Based on the description of the above embodiments, in S130, the APP controls the mower to travel from the first position to the second position to obtain the corridor path. The APP may control the mower to travel from the first position to the second position via various types of routes. Consequently, the APP may adopt various implementations to obtain the corridor path.

As a feasible implementation, the APP may control the mower to travel from the first position to the second position according to a predetermined connecting line to obtain the corridor path.

The predetermined connecting line is a connecting line generated by the APP according to a predetermined rule. The predetermined rule is pre-constructed in the APP.

In one example, in a case where the predetermined rule is to generate a shortest connecting line between two positions, the APP may generate a straight line connecting the first position and the second position according to the predetermined rule to obtain the predetermined connecting line.

In another example, in a case where the predetermined rule is to generate a connecting line bypassing obstacles between two positions, and an obstacle is present between the first lawn and the second lawn, the APP may acquire a coordinate position of the obstacle between the first lawn and the second lawn, and generate a connecting line between the first position and the second position that bypasses the obstacle according to the predetermined rule, to obtain the predetermined connecting line.

Depending on whether the mower detects an obstacle during the process in which the APP controls the mower to travel from the first position to the second position according to the predetermined connecting line, the corridor path constructed by the APP may be subject to the following two situations.

The first situation is as follows: The mower travels from the first position to the second position according to the predetermined connecting line; and in a case where no obstacle is detected during this process, an actual travel path of the mower coincides with the predetermined connecting line, and the corridor path obtained by the APP also coincides with the predetermined connecting line.

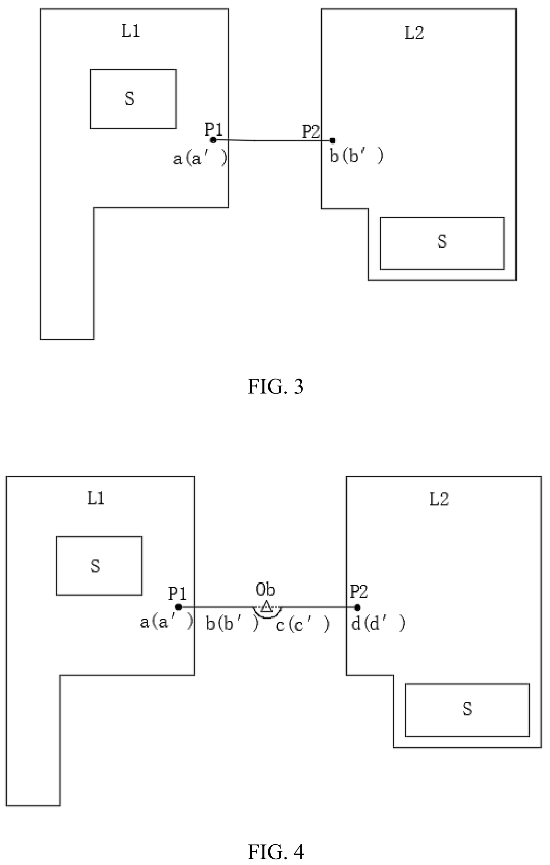

FIG. 3 is a schematic diagram of a scenario where the APP constructs a corridor path in a case where no obstacle is present on the predetermined connecting line. In FIG. 3, the connecting line between P1 and P2 includes a solid line ab and a dashed line a'b' which coincide with each other. The dashed line a'b' represents the predetermined connecting line, and the solid line ab represents the actual travel path of the mower.

The second situation is as follows: The mower travels from the first position to the second position according to the predetermined connecting line, and in a case where an obstacle is detected during this process, the mower automatically bypasses the obstacle. Consequently, the actual travel path of the mower does not coincide with the predetermined connecting line, and the corridor path obtained by the APP does not coincide with the predetermined connecting line either, but coincides with the actual travel path of the mower. That is, in a case where an obstacle is present on the predetermined connecting line, the corridor path obtained by the APP is a path bypassing the obstacle.

FIG. 4 is a schematic diagram of a scenario where the APP constructs a corridor path in a case where an obstacle is present on the predetermined connecting line. In FIG. 4, the obstacle is denoted as Ob. The connecting line between P1 and P2 includes a solid line abcd and a dashed line a'b'c'd' which partially coincide. The dashed line a'b'c'd' represents the predetermined connecting line, and the solid line abcd represents the actual travel path of the mower.

By controlling the mower to travel from the first position to the second position according to the predetermined connecting line via the APP to obtain the corridor path, the APP only needs to receive the first position and the second position indicated by the user during construction of the corridor path. The connecting line between the first position and the second position may be automatically generated according to predetermined rules, thereby reducing user participation in the process of constructing the corridor path and facilitating use of the mower.

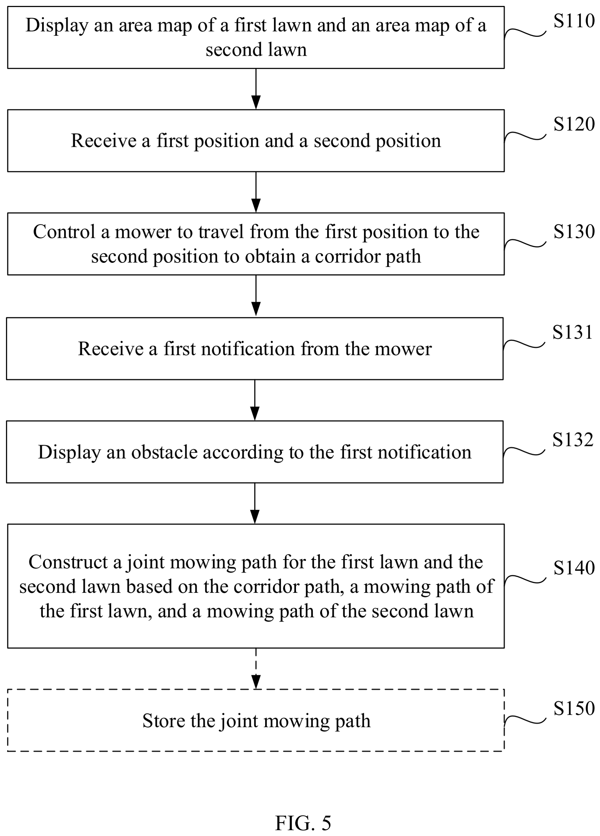

FIG. 5 is a schematic flowchart of a method for constructing a mowing path for multiple lawns according to some embodiments of the present disclosure. As illustrated in FIG. 4 and FIG. 5, in some optional embodiments, in S130, during the process where the APP controls the mower to travel from the first position to the second position according to the predetermined connecting line, in a case where the mower detects an obstacle, the method for constructing a mowing path for multiple lawns further includes the following steps.

In S131, the APP receives a first notification from the mower, wherein the first notification is used to notify that an obstacle is present on the predetermined connecting line.

During the process of traveling from the first position to the second position, the mower may identify and locate the obstacle. Upon identifying the obstacle, the mower may send the first notification to the APP. Exemplarily, the first notification may contain at least one of a type and a position of the obstacle. Furthermore, the first notification may be in a representation form such as text, voice, image, or video.

In S132, the obstacle is displayed according to the first notification.

The APP may display the obstacle on the display screen of the electronic device according to the content of the first notification, for example, Ob in FIG. 4.

The obstacle may be displayed in an area between the area map of the first lawn and the area map of the second lawn.

In a case where the first notification contains the type of the obstacle, the position of the obstacle may be determined according to a reception time of the first notification and the position of the mower, and a marker of the type of the obstacle may be marked and displayed at the position of the obstacle.

In a case where the first notification contains the position of the obstacle, a marker of the obstacle may be marked and displayed at the position.

In a case where the first notification contains the type of the obstacle and the position of the obstacle, the marker of the type of the obstacle may be marked and displayed at the position.

Therefore, by displaying the obstacle, it is convenient to use the obstacle as a reference for positioning when the mower continuously mows the first lawn and the second lawn.

As another feasible implementation for the APP to control the mower to travel from the first position to the second position to obtain the corridor path, in a case where the user has designated a connecting line between the first position and the second position, in S130, controlling, by the APP, the mower to travel from the first position to the second position to obtain the corridor path may also be: controlling, by the APP, the mower to travel from the first position to the second position according to the connecting line designated by the user to obtain the corridor path.

The connecting line designated by the user is a connecting line designated by the user via an instruction in the APP. The instruction may be an indication given by the user via an operation gesture on the display screen of the electronic device, or an input operation of the user.

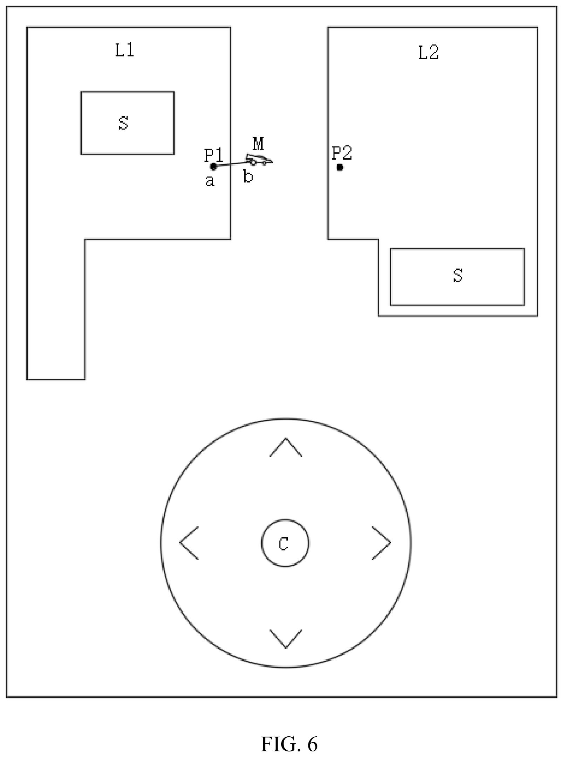

Exemplarily, FIG. 6 is a schematic diagram of human-computer interaction where the user controls the mower to travel by buttons in the APP. In FIG. 6, the arrows in the up, down, left, and right directions of the control C are buttons representing corresponding control directions, M represents the mower, and the solid line ab represents a part of the connecting line designated by the user.

As illustrated in FIG. 6, the APP may receive operations of the user clicking or tapping the buttons, whereby the APP controls the mower to travel along the connecting line designated by the user in real-time.

By controlling the mower to travel from the first position to the second position according to the connecting line designated by the user to obtain the corridor path, since the connecting line designated by the user is generally a connecting line formulated according to user needs, the corridor path obtained by the method conforms more to user needs.

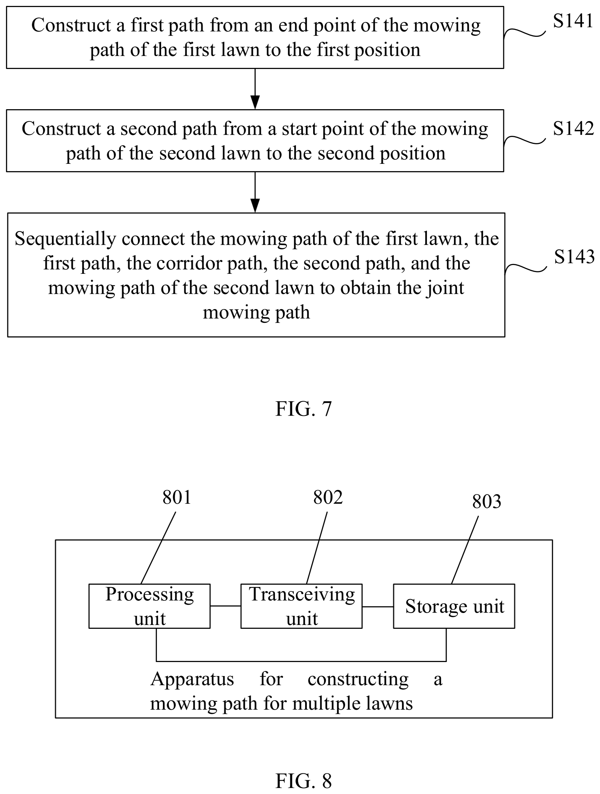

FIG. 7 is a schematic flowchart of a method for constructing a mowing path for multiple lawns according to some embodiments of the present disclosure. By an example where the mower mows the first lawn first and then mows the second lawn, as illustrated in FIG. 7 in some optional embodiments, S140 regarding constructing the joint mowing path for the first lawn and the second lawn based on the corridor path, the mowing path of the first lawn, and the mowing path of the second lawn includes the following steps.

In S141, a first path from an end point of the mowing path of the first lawn to the first position is constructed.

The end point of the mowing path of the first lawn refers to a position where the mower ends mowing during traveling along the mowing path of the first lawn to perform the mowing operation. Correspondingly, a position where the mower starts mowing during traveling along the mowing path of the first lawn to perform the mowing operation is a start point of the mowing path of the first lawn.

The first path is a path connecting the end point of the mowing path of the first lawn and the first position. The first path allows the mower to travel from the end point of the mowing path of the first lawn to the first position within the first lawn.

Since the APP has already obtained the area map of the first lawn during constructing the joint mowing path, the first path may be automatically constructed by the APP according to the end point of the mowing path of the first lawn, the first position, and the area map of the first lawn. For example, the APP may construct the path from the end point of the mowing path of the first lawn to the first position according to the area map of the first lawn, wherein the path bypasses static objects in the first lawn, and the path is used as the first path. The embodiments of the present disclosure do not limit the specific construction of the first path.

In S142, a second path from a start point of the mowing path of the second lawn to the second position is constructed.

The start point of the mowing path of the second lawn refers to a position where the mower starts mowing during traveling along the mowing path of the second lawn to perform the mowing operation. Correspondingly, a position where the mower ends mowing during traveling along the mowing path of the second lawn to perform the mowing operation is an end point of the mowing path of the second lawn.

The second path is a path connecting the start point of the mowing path of the second lawn and the second position. The second path allows the mower to travel from the second position to the start point of the mowing path of the second lawn within the second lawn.

For the specific construction of the second path, reference may be made to the construction of the first path, which is not described herein any further.

In S143, the mowing path of the first lawn, the first path, the corridor path, the second path, and the mowing path of the second lawn are sequentially connected to obtain the joint mowing path.

Sequentially connecting the mowing path of the first lawn, the first path, the corridor path, the second path, and the mowing path of the second lawn to construct the joint mowing path does not mean that the APP performs a process of "connecting sequentially" as described above, but rather means that in the joint mowing path constructed by the APP, the mowing path of the first lawn, the first path, the corridor path, the second path, and the mowing path of the second lawn are in a sequentially connected relationship.

The first path is capable of connecting the mowing path of the first lawn to the corridor path.

The second path is capable of connecting the mowing path of the second lawn to the corridor path.

In this way, the joint mowing path constructed through S141 to S143 facilitates the implementation of the mower continuously performing mowing operations on the first lawn and the second lawn.

In some cases, there may be a situation where the first position coincides with the end point of the mowing path of the first lawn. In this case, it is not necessary to establish the first path between the two coinciding positions. During construction of the joint mowing path, the APP may directly connect the mowing path of the first lawn to the corridor path.

Similarly, in a case where the start point of the mowing path of the second lawn coincides with the second position, the APP does not need to construct the second path either. During construction of the joint mowing path, the APP may directly connect the corridor path to the mowing path of the second lawn.

It may be understood that in a case where the mower operates on the second lawn first and then operates on the first lawn, the joint mowing path from the second lawn to the first lawn may also be constructed with reference to the methods in S141 to S143 as described above. The embodiments of the present disclosure may not repeatedly give description for this situation.

Therefore, in the method according to the embodiments of the present disclosure, by displaying the area map of the first lawn and the area map of the second lawn, the area maps of the first lawn and the second lawn are presented to the user, providing an image (visual) reference for the user to select the first position and the second position. By receiving a position in the area map of the first lawn as the first position and receiving a position in the area map of the second lawn as the second position, two endpoints for establishing the corridor path between the first lawn and the second lawn are provided. By controlling the mower to travel from the first position to the second position to obtain the corridor path, the first lawn and the second lawn may be communicated by using the corridor path, which provides a feasible route for subsequent travel of the mower between the first lawn and the second lawn. By constructing the joint mowing path for the first lawn and the second lawn based on the corridor path, the mowing path of the first lawn, and the mowing path of the second lawn, the mower is enabled to continuously mow the first lawn and the second lawn according to the joint mowing path, without manual intervention, thereby saving time and effort and facilitating use of the mower.

Exemplarily, the present disclosure further provides an apparatus for constructing a mowing path for multiple lawns. The apparatus may be used to perform the processes performed by the electronic device, or the software apparatus or hardware apparatus in the electronic device in the embodiments illustrated in FIG. 1 to FIG. 7. For details, reference may be made to the relevant descriptions in the above method embodiments.

FIG. 8 is a schematic structural diagram of an apparatus for constructing a mowing path for multiple lawns according to some embodiments of the present disclosure. As illustrated in FIG. 8, the apparatus includes: a processing unit 801, configured to display an area map of a first lawn and an area map of a second lawn; and a transceiving unit 802, configured to receive a first position and a second position, wherein the first position is a position within the area map of the first lawn, and the second position is a position within the area map of the second lawn.

The processing unit 801 is further configured to control a mower to travel from the first position to the second position to obtain a corridor path.

The processing unit 801 is further configured to construct a joint mowing path for the first lawn and the second lawn based on the corridor path, a mowing path of the first lawn, and a mowing path of the second lawn, wherein the joint mowing path is used for the mower to continuously mow the first lawn and the second lawn.

In some examples, the processing unit 801 is specifically configured to control the mower to travel from the first position to the second position according to a predetermined connecting line to obtain the corridor path.

In some examples, the transceiving unit 802 is further configured to receive a first notification from the mower, wherein the first notification is used to notify that an obstacle is present on the predetermined connecting line; and the processing unit 801 is further configured to display the obstacle according to the first notification.

In some examples, in a case where an obstacle is present on the predetermined connecting line, the corridor path is a path bypassing the obstacle.

In some examples, the processing unit 801 is specifically configured to control the mower to travel from the first position to the second position according to a connecting line designated by a user to obtain the corridor path.

In some examples, the processing unit 801 is specifically configured to: construct a first path from an end point of the mowing path of the first lawn to the first position; construct a second path from a start point of the mowing path of the second lawn to the second position; and sequentially connecting the mowing path of the first lawn, the first path, the corridor path, the second path, and the mowing path of the second lawn to obtain the joint mowing path.

In some examples, still with reference to FIG. 8, the apparatus further includes a storage unit 803, wherein the storage unit 803 is configured to store the joint mowing path.

Exemplarily, the present disclosure further provides an electronic device. The electronic device includes a memory and a processor, wherein the memory stores a computer program, and the processor, when running the computer program, is caused to perform the method for constructing a mowing path for multiple lawns as described above.

Exemplarily, the present disclosure further provides a computer-readable storage medium. The computer-readable storage medium stores a computer program thereon, wherein the computer program, when executed by a processor, implements the method for constructing a mowing path for multiple lawns as described above.

Exemplarily, the present disclosure further provides a computer program product. The computer program product includes one or more executable instructions, wherein the one or more executable instructions are stored in a readable storage medium. At least one processor of an electronic device is capable of reading the one or more executable instructions from the readable storage medium. The one or more executable instructions, when executed by the at least one processor, cause the electronic device to perform the methods in the above embodiments.

In addition, those skilled in the art shall understand that, although some embodiments described herein include some features included in other embodiments, rather than other features, a combination of the features in different embodiments signifies that the features are within the scope of the present disclosure and different embodiments may be derived. For example, in the claims appended hereinafter, any one of the embodiments for which protection is sought may be practiced in any combination manner.

In summary, it should be finally noted that the above-described embodiments are merely for illustration of the present disclosure, but are not intended to limit the present disclosure. Although the present disclosure is described in detail with reference to these embodiments, a person skilled in the art may also make various modifications to the technical solutions disclosed in the embodiments, or make equivalent replacements to a part of the technical features contained therein. Such modifications or replacements, made without departing from the principles of the present disclosure, shall fall within the scope of the present disclosure.

## Claims

1. A method for constructing a mowing path for multiple lawns, comprising:
displaying (S110), by an electronic device, an area map of a first lawn and an area map of a second lawn;
**characterized in that** the method further comprises:
receiving (S120), by the electronic device, a first position and a second position, wherein the first position is a position within the area map of the first lawn, and the second position is a position within the area map of the second lawn;
controlling (S130), by the electronic device, a mower to travel from the first position to the second position to obtain a corridor path; and
constructing (S140), by the electronic device, a joint mowing path for the first lawn and the second lawn based on the corridor path, a mowing path of the first lawn, and a mowing path of the second lawn, wherein the joint mowing path is used for the mower to continuously mow the first lawn and the second lawn.

2. The method according to claim 1, wherein the controlling the mower to travel from the first position to the second position to obtain the corridor path comprises:
controlling the mower to travel from the first position to the second position according to a predetermined connecting line to obtain the corridor path.

3. The method according to claim 2, further comprising:
receiving (S131), by the electronic device, a first notification from the mower, wherein the first notification is used to notify that an obstacle is present on the predetermined connecting line; and
displaying (S132), by the electronic device, the obstacle according to the first notification.

4. The method according to claim 2, wherein in a case where an obstacle is present on the predetermined connecting line, the corridor path is a path bypassing the obstacle.

5. The method according to claim 1, wherein the controlling the mower to travel from the first position to the second position to obtain the corridor path comprises:
controlling the mower to travel from the first position to the second position according to a connecting line designated by a user to obtain the corridor path.

6. The method according to any one of claims 1 to 5, wherein the constructing the joint mowing path for the first lawn and the second lawn based on the corridor path, the mowing path of the first lawn, and the mowing path of the second lawn comprises:
constructing (S141), by the electronic device, a first path from an end point of the mowing path of the first lawn to the first position;
constructing (S142), by the electronic device, a second path from a start point of the mowing path of the second lawn to the second position; and
sequentially connecting (S143), by the electronic device, the mowing path of the first lawn, the first path, the corridor path, the second path, and the mowing path of the second lawn to obtain the joint mowing path.

7. The method according to claim 6, wherein the first path is used to connect the mowing path of the first lawn to the corridor path, and the second path is used to connect the mowing path of the second lawn to the corridor path.

8. The method according to any one of claims 1 to 7, further comprising:
storing (S 150), by the electronic device, the joint mowing path.

9. The method according to any one of claims 1 to 8, further comprising:
receiving all recorded consecutive coordinate positions from the first position to the second position, which are recorded by the mower during travel, from the mower; and
obtaining the corridor path according to all the recorded consecutive coordinate positions.

10. An electronic device for constructing a mowing path for multiple lawns, **characterized in that** the electronic device is configured to perform the method as claimed in any one of claims 1 to 9.

11. A computer readable medium, storing a computer program thereon, wherein the computer program, when executed by a processor, causes the processor to perform the method as claimed in any one of claims 1 to 9.
